# EUROPÄISCHE PATENTANMELDUNG

(11) **EP 2 208 962 A2**
(43) Veröffentlichungstag der Anmeldung: **21.07.2010**
(21) Anmeldenummer: 10000298.9
(22) Anmeldetag: 14.01.2010
(51) Int. Cl.: G01B 5/20

(54) **Messverfahren und Messvorrichtung zur Erfassung von Werstückaufmassen**

(30) Priorität: 14.01.2009 DE 102009004982
(71) Anmelder: Höfler Maschinenbau GmbH, 76275 Ettlingen (DE)
(72) Erfinder: Rabold, Frank, 76275 Ettlingen (DE); Geiser. Hansjörg Dr., 76571 Gaggenau-Ottenau (DE); Glied, Michael, 76275 Ettlingen (DE); Bister, Gerd, 78727 Oberndorf (DE)
(74) Vertreter: Mischung, Ralf

(57) **Zusammenfassung**

Die Erfindung betrifft ein Verfahren und eine geeignete Vorrichtung zur Erfassung von Werkstückaufmaßen, wobei eine Antastbewegung mit einer am Werkstück entlang führenden Grundbewegung eines Messtasters überlagert wird.

## Beschreibung

Die vorliegende Erfindung betrifft ein Messverfahren zur Ermittlung von Werkstückaufmaßen und eine zur Durchführung des Verfahrens geeignete Vorrichtung.

Aus dem Stand der Technik ist es bekannt, das Aufmaß eines Werkstücks mithilfe von Messtastern zu erfassen, um die genaue Positionierung des Werkstücks oder auch Abweichungen vom Sollmaß genau zu erfassen. Ein nachfolgender Bearbeitungsschritt kann die so erfassten Aufmaße berücksichtigen und beispielsweise Schrupp- oder Schleifvorgänge in Abhängigkeit der erfassten Maße ausführen.

Bekannt ist zur Erfassung des Aufmaßes die schaltende oder die scannende Messung. Bei der scannenden Messung wird ein eindimensionaler Messtaster an der Werkstückoberfläche entlang geführt und dabei unterschiedlich stark ausgelenkt. Das erfasste Maß der Auslenkung gibt die tatsächliche Form des Werkstücks in diesem Bereich wieder. Nachteiligerweise kann ein für die scannende Messung verwendeter Messtaster üblicherweise nur in eine Richtung des Raumes ausgelenkt werden und ein Verdrehen des Messtasters scheidet aufgrund verfälschender Schwerkrafteinflüsse aus. So können nur Oberflächen ermittelt werden, bei denen eine horizontale Komponente ausreicht, um den Messtaster auszulenken.

Bei der schaltenden Messung dagegen werden einzelne Oberflächenpunkte eines Werkstücks mit der Messspitze eines Messtasters angefahren und kontaktiert, bis die Messspitze beispielsweise um 10µm aus ihrer Ruhelage ausgelenkt wird. Ein entsprechendes Signal interpretiert dies als Kontakt mit der zu erfassenden Oberfläche. Anschließend wird der Messtaster von der Oberfläche wieder wegbewegt und zu einem weiteren, vom ersten Oberflächenpunkt beabstandeten zweiten Oberflächenpunkt bewegt, um eine weitere Messung vorzunehmen. Diese Messung erfasst nur einzelne Oberflächenpunkte, was im Eintelfall jedoch ausreichen kann.

Aus dem Stand der Technik ist es bekannt, die Oberfläche eines Werkstücks durch schaltende Messung punktweise zu erfassen, indem der Messtaster eine Grundbewegung (beispielsweise beabstandet parallel zur Werkstückoberfläche) vollführt und in regelmäßigen Abständen angehalten wird, um (meist senkrecht zur Grundbewegung) zur Werkstückoberfläche hin zu verfahren, bis die Spitze des Messtasters in vorbeschriebener Weise Kontakt mit der Oberfläche herstellt. Sodann wird der Messtaster (typischerweise wieder senkrecht) von der Oberfläche zurückbewegt bis auf die der Grundbewegung zugeordnete Grundbahn. Sodann wird der Taster entlang der Grundbahn um ein Maß weiterbewegt, um dann wiederum eine Tastbewegung zum Werkstück hin bzw. davon weg zu vollführen.

Diese Art der schaltenden Messung ist zeitaufwändig. Andererseits kann die punktuelle Erfassung der Werkstückoberfläche genügen, um ein hinreichend genaues Abbild des Aufmaßes zu bekommen und beispielsweise nicht abgetastete Bereiche durch Interpolation zu ermitteln.

Aufgabe der Erfindung ist es daher, ein Messverfahren anzubieten, mit dem einerseits das Aufmaß eines Werkstücks, insbesondere eines Zahnrads, hinreichend genau ermittelt werden kann und welches andererseits möglichst schnell durchführbar ist. Aufgabe ist weiterhin die Bereitstellung einer Vorrichtung zur Durchführung eines solchen Verfahrens.

Die Aufgabe wird gelöst durch ein Verfahren nach Anspruch 1 bzw. eine Vorrichtung nach Anspruch 10.

Die Erfindung geht von der Erkenntnis aus, dass die schaltende Messung vorteilhaft beschleunigt werden kann, indem die jeweilige Antastbewegung des Messtasters an die Werkstückoberfläche bzw. von ihr weg überlagert wird mit einer Grundbewegung, mit der der Messtaster am Werkstück vorbeibewegt wird. Mit anderen Worten: Anstatt den Messtaster streng abwechselnd die Grundbewegung und die Antastbewegung ausführen zu lassen werden beide Bewegungen erfindungsgemäß überlagert. Dies führt dazu, dass der Messtaster nach Kontaktierung eines Oberflächenpunktes zwar von der Oberfläche zunächst wieder weggeführt wird, im Rahmen dieser Bewegung jedoch bereits der Grundbewegung folgt und in Richtung zum nächsten Oberflächenpunkt bewegt wird. Auch die daran anschließende Annäherung an den nächsten Oberflächenpunkt im Rahmen der Antastbewegung wird vorzugsweise unter gleichzeitiger Durchführung der Grundbewegung vollzogen, so dass sich die Spitze des Messtasters beispielsweise bogenförmig von einem Oberflächenpunkt zum nächsten bewegt. Die Wegstrecke des Messtasters relativ zum Werkstück wird dabei erheblich verkürzt, wodurch eine entsprechende Zeitersparnis möglich wird. Eine typische Messbewegung bei der Durchführung des erfindungsgemäßen Verfahrens hat beispielsweise sinusförmige Gestalt, wobei die Amplitude der Messbewegung so gewählt wird, dass das zu erwartende Aufmaß erfasst werden kann.

[Unter Tastbewegung sei im Folgenden eine Bewegung weitgehend lotrecht auf eine Oberfläche zu oder von der Oberfläche weg verstanden. Die Grundbewegung dagegen entspricht einer Bewegung des Messtasters weitgehend parallel zur Werkstückoberfläche oder auf einer geraden Bahn, von der an unterschiedlichen Positionen Tastbewegungen ausgehen, üblicherweise rechtwinklig zur Grundbewegung. Unter Messbewegung schließlich sei die Bewegung verstanden, die sich aus Überlagerung von Grundbewegung und Tastbewegung relativ zum Werkstück ergibt. ]

Das erfindungsgemäße Messverfahren ist zur Ermittlung von Werkstückaufmaßen, insbesondere von Zahnrädern geeignet. Zur Ermittlung von Oberflächenkoordinaten wird eine Messvorrichtung eingesetzt, die einen Messtaster umfasst und mit einer geeigneten Auswerteeinrichtung verbunden ist. Erfindungsgemäß ermittelt der Messtaster einzelne, nicht aneinandergrenzende Punkte einer zu erfassenden Oberfläche, in dem er jeweils in einer Tastbewegung
- zur Oberfläche hingeführt wird, bis er sie innerhalb vorgebbarer Toleranzen kontaktiert, um ein entsprechendes Kontaktsignal zur Weiterverarbeitung auszugeben,
- und anschließend den Kontakt wieder löst, in dem er von der kontaktierten Oberfläche wegbewegt wird,
wobei sich aus Überlagerung der Tastbewegung mit einer Grundbewegung, die den Messtaster in einer vorzugsweise kontinuierlichen Bewegung am Werkstück entlang führt, eine resultierende Messbewegung relativ zum Werkstück ergibt.

Der erfindungsgemäße Vorteil der Zeitersparnis beruht darauf, dass die Grundbewegung entlang des Werkstückes nicht unterbrochen wird, während die Tastbewegungen ausgeführt werden.

Nach einer vorteilhaften Ausführungsform der Erfindung wird die Tastbewegung bzw. die Messbewegung durch eine überlagerte Bewegung der Shiftachse und/oder der Tischachse einer Zahnradschleifmaschine erzeugt. Dadurch können ohnehin bestehende Achsen einer Werkzeugmaschine auch zur Positionierung bzw. zur Führung des Messtasters in der Messbewegung Verwendung finden, was die Durchführung des Verfahrens zusätzlich vereinfacht.

In Weiterführung des der Erfindung zugrundeliegenden Gedankens sieht eine weitere vorteilhafte Ausführungsform der Erfindung vor, dass Punkte auf unterschiedlichen Profilhöhen und/oder auf unterschiedlichen Stimschnittebenen eines Zahnrads in einer frei vorgebbaren Reihenfolge abgetastet werden. Erfindungsgemäß ist auch die Messung nach Vorgabe komplexer Antastmuster möglich. Beispielsweise könnte ein Fünfpunktmuster oder ein Neunpunktmuster einer Zahnflanke eines Zahnrads zugeordnet werden, wobei die fünf oder neun Punkte im Rahmen der Messung jeweils angefahren werden. Anstatt die Zahnflanke in unterschiedlichen Höhen komplett abzufahren, kann die Reduzierung der Messung auf einige Punkte der Zahnflanke genügen, um Verschränkungsmessungen mit ausreichender Genauigkeit durchzuführen und dabei gegenüber der scannenden Messung erheblich Zeit einzusparen.

Eine weitere vorteilhafte Ausführungsform der Erfindung sieht vor, dass die Reihenfolge und/oder Anzahl und/oder Lage der abzutastenden Messpunkte von Zahnlücke zu Zahnlücke so variiert werden, dass nur vorbestimmte oder im Rahmen des Messung festgelegte Bereiche der Zahnflanke abgetastet werden. So kann etwa die Anzahl oder Lage abzutastender Punkte in einer Zahnlücke eines Zahnrades abhängig gemacht werden von den Messergebnissen einer vorherigen Zahnlücke oder auch von unmittelbar in der selben Lücke zuvor erfassten Daten.

Auch wenn die Flankenform dabei nicht so detailliert erkannt wird, wird das Aufmaß doch an allen entscheidenden Stellen der Flanke ermittelt, an denen beispielsweise durch Verzug beim Härten größere Aufmaße entstanden sein könnten.

Erfindungsgemäß kann die Reihenfolge des Abtastens der Punkte dabei so variiert werden, dass unter Berücksichtigung der Maschinenkinematik und der Maschinendynamik eine möglichst geringe Messzeit resultiert.

Speziell für die Erfassung der Zahnflanken zu beiden Seiten einer Zahnlücke sieht eine vorteilhafte Ausführungsform des erfindungsgemäßen Verfahrens vor, dass einzelne Punkte (P₁, P₂, P₃; P₄...) oder Gruppen von Punkten abwechselnd auf den gegenüberliegenden Zahnflanken abgetastet werden. Das heißt, dass der Messtaster während der Messung von der einen zur gegenüberliegenden anderen Flanke bewegbar ist, um diese zu kontaktieren. So kann die zeitlich optimierte Messung zweier gegenüberliegender Zahnflanken beispielsweise so erfolgen, dass für beide Flanken jeweils ein abzutastendes Fünf-Punkt-Muster festgelegt wird. Dabei ist es nicht zwingend erforderlich, dass zunächst ein Fünf-Punkt-Muster der einen Zahnflanke komplett abgefahren werden muss, bevor die gegenüberliegende Zahnflanke kontaktiert wird. Stattdessen könnten - je nach zeitlicher Optimierung - zunächst einige Punkte (bspw. P₁, P₂) der ersten Flanke, anschließend einige oder alle Punkte (bspw. P₆, P₇) der gegenüberliegenden Flanke und dann weitere Punkte (P₃; P₄...) der ersten Flanke abgetastet werden.

Besonders vereinfacht wird diese Art des Messens dadurch, dass ein Messtaster verwendet wird, der mit wenigstens zwei voneinander beabstandeten Messspitzen ausgestattet ist. Zweckmäßigerweise wird der Messtaster so in die Zahnlücke eingebracht, dass eine Messspitze näher an der einen Flanke und die andere Messspitze näher an der gegenüberliegenden andere Flanke liegt. In diesem Fall kann die abwechselnde Kontaktierung der Flanken erheblich schneller und unter geringerem Verfahrweg durchgeführt werden als mit einer einzelnen Messspitze. Das liegt daran, dass der Messtaster mit zwei Messspitzen nicht durch die gesamte Lücke gefahren werden muss, um von einer Flanke zur anderen zu gelangen. Stattdessen ist lediglich der Abstand der Zahnflanken abzüglich des Abstands der Messspitzen zurückzulegen, was erheblich schneller geht.

Das erfindungsgemäße Verfahren mit wenigstens zwei voneinander beabstandeten Messspitzen gestattet also eine Messung bei der
a) unmittelbar aufeinanderfolgende Messpunkte von jeweils einer anderen Messspitze abgetastet werden, oder
b) bei der alle Punkte (P₁, P₂, P₃; P₄...) aus einer Gruppe von nacheinander zu erfassenden Messpunkten von der gleichen Messspitze abgetastet werden, während anschließend die Punkte (P₈, P₉, P₁₀; P₁₁...) einer anderen Gruppe von Messpunkten von einer anderen Messspitze abgetastet werden.

Eine Gruppe kann dabei auf einen einzigen Messpunkt reduziert sein. So kann das Verfahren auch ausgeführt werden, in dem eine Messspitze regelmäßig eine geringere Anzahl von Oberflächenpunkten kontaktiert als die andere Messspitze. Denkbar ist es auch, einen ersten Messpunkt einer ersten Flanke mit einer ersten Messspitze zu kontaktieren, anschließend zur gegenüberliegenden Flanke zu verfahren und dort mit der anderen Messspitze einen oder mehrere Messpunkte zu kontaktieren, um anschließend wieder zur ersten Flanke zurückzufahren, um mit der ersten Messspitze dort wieder einen oder mehrere Punkte dieser ersten Flanke zu kontaktieren, wonach wieder zur gegenüberliegenden FlanKe gefahren wird, um dort mit der zweiten Messspitze zu messen und so weiter.

Allgemein gestattet das erfindungsgemäße Verfahren, insbesondere unter Einsatz von mehreren Messspitzen an einem Messtaster, die zeitoptimierte Ausführung einer Aufmaßerfassung, in dem die Reihenfolge der Messpunkte bzw. der dazwischenliegenden Wegstrecken optimiert wird.

Eine Messvorrichtung zur Ermittlung von Werkstückaufmaßen, insbesondere nach einem der vorstehenden Verfahren, sieht daher einen Messtaster und eine die Signale des Messtasters verarbeite Auswerteeinheit vor. Der Messtaster umfasst zum Ertasten von Oberflächenpunkten eines Werkstücks, insbesondere eines Zahnrads, wenigstens zwei Messspitzen. Erfindungsgemäß ist der Messtaster so bewegbar, dass von einer Anzahl zu ertastender Oberflächenpunkte ein Teil von einer ersten Messspitze erfasst wird, während ein anderer Teil von einer anderen Messspitze erfasst wird.

Dadurch wird der erfindungsgemäße Vorteil realisiert, die Verfahrwege eines Messtasters zwischen einzelnen Messpunkten, insbesondere auf gegenüberliegenden Flanken einer Zahnlücke eines Zahnrads, zu minimieren und dadurch die Messzeit zu reduzieren.

Nach einer weiteren Ausführungsform der Erfindung sind die Messspitzen stabförmig ausgebildet, so dass deren freie Enden vorteilhaft zum Antasten vom Oberflächenpunkten vorgesehen sind. Die Messspitzen sind dabei relativ zu einem Grundkörper auslenkbar angeordnet. Durch Bewegen des Grundkörpers mit den Messspitzen in Richtung auf eine Oberfläche gelangt eine der Messspitzen mit der Oberfläche in Kontakt. Ein weiteres Verfahren in Richtung auf die Oberfläche (beispielsweise um fünf oder zehn µm) beaufschlagt die Messspitze und lenkt sie relativ zum Grundkörper so aus, dass über einen geeigneten Sensor innerhalb der Messvorrichtung ein Kontaktsignal erzeugt wird, wodurch die Kontaktierung der Oberfläche signalisiert und weiter verarbeitet werden kann.

Zweckmäßigerweise sind die beiden Messspitzen an einem gemeinsamen Befestigungsabschnitt angeordnet, mit dem sie am Grundkörper befestigbar sind. Zur Anpassung auf individuelle Abtasterfordernisse sind die Messspitzen vorzugsweise in einer frei wählbaren Ruhelage relativ zum Grundkörper ausrichtbar. Jede Messspitze kann also vor Beginn der Messung in eine (vorzugsweise beliebig einstellbare) Ausgangslage relativ zum Grundkörper gebracht werden, wobei die Auslenkung der Messspitze aus dieser Ausgangslage in vorbeschriebener Weise zu einem Kontaktsignal führt. Dadurch können auch die freien Enden mehrerer Messspitzen so relativ zueinander positioniert werden, dass beispielsweise die gegenüberliegenden Flanken einer Zahnlücke ohne allzu große Verfahrwege des Grundkörpers abtastbar sind.

Insbesondere gestattet die erfindungsgemäße Messvorrichtung nach einer vorteilhaften Ausführungsform, dass die beiden stabförmigen Messspitzen so angeordnet werden, dass deren freie Enden zu einander beabstandet sind, so dass die in einer Ausnehmung eines zu erfassenden Körpers einander gegenüberliegenden Oberflächen jeweils von der der jeweiligen Oberfläche näherliegenden Messspitze antastbar sind. Insbesondere diese erfindungsgemäße Eigenschaft gestattet die Erfassung des Aufmaßes von Werkstücken unter erheblicher Zeitersparnis gegenüber dem Stand der Technik. Grundsätzliche sind auch mehr als zwei Messspitzen pro Messtaster denkbar.

Eine besonders geeignete Variante der vorbeschriebenen Messvorrichtung umfasst eine V-förmige Anordnung zweier Messspitzen, wie sie im Figurenbeispiel näher beschrieben wird.

Weitere vorteilhafte Ausführungsformen ergeben sich aus den Unteransprüchen.

Nachfolgend wird eine Ausführungsform einer erfindungsgemäßen Messvorrichtung anhand eines Figurenbeispiels näher erläutert.

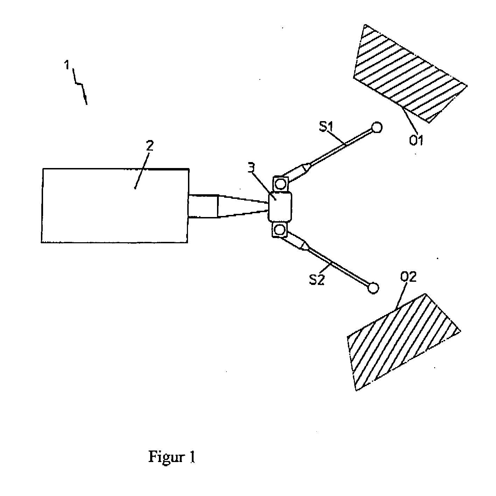

Die einzige Fig. 1 zeigt dabei eine Messvorrichtung mit einem Messtaster 1. Der Messtaster 1 umfasst einen Grundkörper 2. An dem Grundkörper 2 ist ein Befestigungsabschnitt 3 angeordnet, der relativ zum Grundkörper 2 um einen nicht näher dargestellten Drehpunkt auslenkbar ist. Die Auslenkung des Befestigungsabschnitts 3 relativ zum Grundkörper 2 um ein vorgebbares Maß erzeugt ein vorzugsweise elektrisches Kontaktsignal, welches über eine nicht dargestellte Auswerteeinheit weiterverarbeitbar ist und insbesondere zur Steuerung der Bewegung des Messtasters Anwendung findet.

An dem Befestigungsabschnitt 3 sind zwei Messspitzen S₁ und S₂ in etwa V-förmiger Anordnung befestigt. Die freien Enden jeder Messspitze S₁, S₂ sind zur Kontaktierung zu erfassender Oberflächen O₁ bzw. O₂ vorgesehen.

Eine Bewegung des Messtasters 1 in Richtung auf die in Fig. 1 angedeutete Oberfläche O₁ führt dazu, dass die Messspitze S₁ mit ihrem freien Ende die Oberfläche O₁ berührt, und bei weiterem Verfahren den starr mit der Messspitze S₁ verbundenen Befestigungsabschnitt 3 relativ zum Grundkörper 2 nach unten auslenkt, wodurch das vorbeschriebene Kontaktsignal ausgelöst wird.

Eine Bewegung des Messtasters 1 in die entgegengesetzte Richtung (in Fig. 1 etwa senkrecht nach unten) führt dagegen zu einer Kontaktierung des freien Endes der zweiten Messspitze S₂ mit der Oberfläche O₂. In gleicher Weise wird bei weiterem Verfahren des Messtasters 1 eine Auslenkung des Befestigungsabschnitts 3 relativ zum Grundkörper nach oben und damit die Erzeugung eines Kontaktsignals erfolgen.

Aus Fig. 1 ist leicht ersichtlich, dass zur Erfassung beider beabstandeter Oberflächen O₁,O₂ der Messtaster nicht über deren gesamten Abstand verfahren werden muss. Stattdessen wird der erforderliche Verfahrweg zur Kontaktierung beider Oberflächen erheblich reduziert durch die beabstandet zueinander angeordneten freien Enden der beiden Messspitzen S₁, S₂ (wobei der exakte Abstand der freien Enden für die Auswertung der Kontaktsignale vorzugsweise als bekannt vorausgesetzt wird).

## Patentansprüche

1. Messverfahren zur Ermittlung von Werkstückaufmaßen, insbesondere von Zahnrädern,
a) wobei zur Ermittlung von Oberflächenkoordinaten eine Messvorrichtung, umfassend einen Messtaster (1) mit zugehöriger Auswerteeinrichtung, eingesetzt wird, und
b) wobei der Messtaster (1) einzelne, nicht aneinandergrenzende Punkte (P₁, P₂, P₃; P₄...) einer zu erfassenden Oberflächen ermittelt, indem er jeweils in einer Tastbewegung
b1) zur Oberfläche hingeführt wird, bis er sie innerhalb vorgebbarer Toleranzen kontaktiert, um ein entsprechendes Kontaktsignal zur Weiterverarbeitung auszugeben,
b2) und anschließend den Kontakt wieder löst, in dem er von der kontaktierten Oberfläche wegbewegt wird,
c) wobei sich aus Überlagerung der Tastbewegung mit einer Grundbewegung, die den Messtaster (1) in einer vorzugsweise kontinuierlichen Bewegung am Werkstück entlang führt, eine resultierende Messbewegung relativ zum Werkstück ergibt.

2. Messverfahren nach Anspruch 1, **dadurch gekennzeichnet, dass** die Tastbewegung und/oder die Messbewegung durch eine überlagerte Bewegung der Shiftachse und/oder der Tischachse einer Zahnradschleifmaschine erzeugt wird.

3. Messverfahren nach Anspruch 1 oder 2, **dadurch gekennzeichnet, dass** die Messbewegung wenigstens zwischen zwei Oberflächenpunkten (P₁, P₂, P₃; P₄...) entlang einer stetig differenzierbaren Kurve relativ zum Werkstück erfolgt.

4. Messverfahren nach einem der vorigen Ansprüche, **dadurch gekennzeichnet, dass** Punkte auf unterschiedlichen Profilhöhen und/oder auf unterschiedlichen Stirnschnittebenen eines Zahnrads in einer frei vorgebbaren Reihenfolge abgetastet werden.

5. Messverfahren nach einem der vorigen Ansprüche, **dadurch gekennzeichnet, dass** die Reihenfolge und/oder Anzahl und/oder Lage der abzutastenden Messpunkte (P₁, P₂, P₃; P₄...) auf einem Zahnrad von Zahnlücke zu Zahnlücke variiert wird.

6. Messverfahren nach Anspruch 5, **dadurch gekennzeichnet, dass** eine Variation der Messpunkte auf Basis der bereits erfassten Messpunkte erfolgt.

7. Messverfahren nach einem der vorigen Ansprüche, **dadurch gekennzeichnet, dass** in einer Zahnlücke eines Zahnrades wahlweise nur die Punkte auf einer Zahnflanke oder auf beiden Zahnflanken abgetastet werden.

8. Messverfahren nach dem vorhergehenden Anspruch, **dadurch gekennzeichnet, dass** einzelne Punkte oder Gruppen von Punkten abwechselnd auf gegenüberliegenden Zahnflanken einer Zahnlücke abgetastet werden.

9. Messverfahren nach einem der vorigen Ansprüche, **dadurch gekennzeichnet, dass** ein Messtaster verwendet wird, der mit wenigstens zwei voneinander beabstandeten Messspitzen (S₁, S₂...) ausgestattet ist, wobei wenigstens zwei der Messspitzen (S₁, S₂...) zum Abtasten der Oberfläche verwendet werden, und wobei die zur Messung verwendeten Messspitzen (S₁, S₂...) wenigstens teilweise verschiedene Oberflächenpunkte abtasten.

10. Messverfahren nach dem vorigen Anspruch, **dadurch gekennzeichnet, dass** die Messung mit den zur Messung verwendeten Messspitzen (S₁, S₂...) erfolgt,
a) indem unmittelbar aufeinander folgende Messpunkte (P₁, P₂, P₃, P₄...) von jeweils einer anderen Messspitze (S₁, S₂...) abgetastet werden, oder
b) indem in einer Gruppe von nacheinander zu erfassenden Messpunkten (P₁, P₂, P₃, P₄...) alle Punkte von einer Messspitze (S₁) abgetastet werden, während anschließend alle Punkte einer anderen Gruppe von Messpunkten (P₅, P₆, P₇, P₈...) von einer anderen Messspitze (S₂) abgetastet werden.

11. Messverfahren nach einem der vorigen Ansprüche, **dadurch gekennzeichnet, dass** die Reihenfolge der nacheinander abzutastenden Messpunkte (P₁, P₂, P₃, P₄...) hinsichtlich minimaler Messzeit optimiert wird.

12. Messvorrichtung zur Ermittlung von Werkstückaufmaßen, insbesondere nach einem der vorstehenden Verfahren,
a) mit wenigstens einem Messtaster (1) und einer die Signale des Messtasters verarbeitenden Auswerteeinheit,
b) wobei der wenigstens eine Messtaster zum Ertasten von Oberflächenpunkten wenigstens zwei Messspitzen (S₁, S₂...) umfasst,
c) und wobei der Messtaster (1) so bewegbar ist, dass von einer Anzahl zu ertastender Oberflächenpunkte (P₁, P₂, P₃, P₄...) ein Teil von einer ersten Messspitze (S₁) erfasst wird, während ein andere Teil von einer anderen Messspitze (S₂) erfasst wird.

13. Messvorrichtung nach dem vorigen Anspruch, **dadurch gekennzeichnet, dass** der Messtaster folgendes umfasst:
a) zwei stabförmige Messpitzen (S₁, S₂), deren freie, z.B. kugelförmige, Enden zum Antasten von Oberflächenpunkten vorgesehen sind,
b) einen Grundkörper (2), relativ zu dem die Messpitzen (S₁, S₂) auslenkbar angeordnet sind, und
c) einen beiden Messspitzen gemeinsamen Befestigungsabschnitt (3), über den die Messspitzen am Grundkörper befestigt sind, wobei jede Messspitze (S₁, S₂) in eine frei wählbare Ruhelage relativ zum Grundkörper (2) ausrichtbar ist.

14. Messvorrichtung nach einem der vorhergehenden Vorrichtungsansprüche, **dadurch gekennzeichnet, dass** zwei stabförmige Messspitzen (S₁, S₂) so angeordnet sind, dass deren freie Enden zueinander beabstandet sind, so dass die in einer Ausnehmung eines zu erfassenden Körpers einander gegenüberliegenden Oberflächen jeweils von der der jeweiligen Oberfläche näherliegenden Messspitze (S₁, S₂) antastbar sind.

15. Messvorrichtung nach dem vorhergehenden Anspruch, **dadurch gekennzeichnet, dass** die Messspitzen (S₁, S₂) in V-förmiger Ausrichtung angeordnet sind
